# EUROPÄISCHE PATENTSCHRIFT

(11) **EP 3 884 254 B1**
(45) Veröffentlichungstag und Bekanntmachung des Hinweises auf die Patenterteilung: **27.04.2022**
(21) Anmeldenummer: 21703414.9
(22) Anmeldetag: 03.02.2021
(51) Int. Cl.: G01M 3/40, B30B 7/04, F16L 33/22

(54) **VERFAHREN ZUR HERSTELLUNG EINER HOCHDRUCK-HYDRAULIKLEITUNG SOWIE RADIALPRESSE ZUR DURCHFÜHRUNG DES VERFAHRENS**
METHOD FOR PRODUCING A HIGH-PRESSURE HYDRAULIC LINE, AND ALSO RADIAL PRESS FOR CARRYING OUT THE METHOD
PROCÉDÉ DE FABRICATION D'UNE CONDUITE HYDRAULIQUE HAUTE-PRESSION, ET ÉGALEMENT PRESSE RADIALE POUR METTRE EN OEUVRE LE PROCÉDÉ

(30) Priorität: 04.02.2020 DE 102020102724
(43) Veröffentlichungstag der Anmeldung: 29.09.2021
(73) Patentinhaber: Uniflex-Hydraulik GmbH, 61184 Karben (DE)
(72) Erfinder: POTH, Hubert, 61169 Friedberg (DE)
(74) Vertreter: Grättinger Möhring von Poschinger Patentanwälte Partnerschaft mbB
(86) Internationale Anmeldenummer: PCT/EP2021/052489
(87) Internationale Veröffentlichungsnummer: WO 2021/156278

(56) Entgegenhaltungen:
- EP-A1- 1 935 525
- WO-A1-2012/088251
- DE-A1- 2 814 064
- DE-C1- 3 905 856
- GB-A- 2 179 751
- US-A- 5 969 618

## Beschreibung

Die vorliegende Erfindung betrifft ein Verfahren zur Herstellung einer Hochdruck-Hydraulikleitung. In größerem Detail betrifft die vorliegende Erfindung ein Verfahren zur Herstellung einer Hochdruck-Hydraulikleitung unter Anbringen einer Anschlussarmatur endseitig an einem mehrlagigen, mindestens eine Armierungslage aufweisenden Hochdruckschlauch, umfassend die folgenden Schritte: Bereitstellen eines Abschnitts eines armierten Hochdruckschlauches sowie einer mit diesem zu fügenden Anschlussarmatur, Aufsetzen der Anschlussarmatur auf den Endabschnitt des Hochdruckschlauches, und Durchführen einer Fügeoperation unter Ausbildung einer dichten Verbindung des Hochdruckschlauches mit der Anschlussarmatur. Weiterhin betrifft die vorliegende Erfindung eine zur Durchführung eines solchen Herstellungsverfahrens geeignete Radialpresse.

Hochdruck-Hydraulikleitungen werden im großen Umfang in vorstehend genannter Weise hergestellt, wobei typischerweise mit beiden Enden des Schlauchabschnitts jeweils eine Anschlussarmatur gefügt wird. Eine sehr verbreitete eingesetzte Möglichkeit, die (jeweilige) Anschlussarmatur mit dem Schlauchabschnitt an dem (betroffenen) Ende zu fügen, besteht in dem Radialverpressen einer Presshülse der betreffenden Anschlussarmatur dergestalt, dass der - zumeist vorher außen und/oder innen geschälte - Schlauch in dem zwischen der (den Schlauch außen umgebenden) Presshülse und einem (in das Innere des Schlauchs eingepressten) Nippel bestehenden Ringspalt fest, dauerhaft und mediendicht eingequetscht wird. Dies ist ebenso Stand der Technik wie hierfür geeignete Radialpressen (vgl. beispielsweise DE 28 44 475 A1).

Die EP 1 935 525 A1 offenbart ein Verfahren zur Herstellung einer Schlauchleitung durch Fügen eines Schlauches mit einem Fitting. Wird dabei ein mehrlagiger, mindestens eine Armierungslage aufweisender Hochdruckschlauch verwendet, so entspricht das betreffende Verfahren dem einleitend genannten, gattungsgemäßen Stand der Technik. Um auch bei einem automatisierten Verfahren reproduzier- und nachprüfbar die lagerichtige Positionierung von Schlauch und Nippel zueinander zu erreichen, kommt dabei eine Montagevorrichtung mit einem auf den Nippel aufgesetzten geteilten Anschlagring zum Einsatz. Das Aufschieben des Schlauches samt der auf diesen aufgesetzten Presshülse auf den Nippel wird bei Erreichen eines Anschlagsensors beendet; und nach einem Zurückfahren der Aufschiebevorrichtung in eine Messstellung erfolgt ein Prüfen der axialen Position des Schlauchnippels mittels einer Messvorrichtung und Abgleich mit einem vorgegebenen Sollwert, woraufhin die Radialverpressung mittels eines geeigneten Presswerkzeugs erfolgt.

Die US 5,969,618 A offenbart eine Schlauchleitung mit einem Ausfall-Sensor. Dabei sind in den Zwischenraum zwischen den beiden Lagen eines zweilagigen Schlauches zwei an eine Messvorrichtung angeschlossene Elektroden eingelegt, ohne einander zu berühren. Wird die innere Lage des Schlauches (insbesondere durch Verschleiß) undicht, so gelangt die den Schlauch durchströmende Flüssigkeit in den Bereich der beiden Elektroden. Die sich dadurch ergebende Änderung des Widerstands löst - als Indiz für eine undichte innere Lage - einen Alarm aus.

In der WO 2012/088251 A1 wird vorgeschlagen, auf den Nippel eines Fittings einen Clip aufzusetzen, welcher mindestens einen klingenartigen Vorsprung aufweist. Dieser schlitzt beim Aufschieben eines mehrlagigen, mindestens eine Armierungslage aufweisenden Schlauches dessen innere Lage und stellt einen guten, niederohmigen elektrischen Kontakt zwischen dem Fitting und der (innersten) Armierungslage her. So kann die (innerste) Armierungslage des Schlauches als Signalleiter für den Anschluss eines an oder in dem Schlauch vorgesehenen Sensors an eine Elektronikeinheit genutzt werden.

Die Qualität der Verbindung der zwischen der Anschlussarmatur und dem Schlauchabschnitt ist unter Gesichtspunkten der Arbeits- und Betriebssicherheit extrem bedeutsam. Denn ein Ausreißen des Schlauchabschnitts aus der Anschlussarmatur bei einem Hochdruckbetrieb stellt ein ganz erhebliches Risiko für die Gesundheit bzw. körperliche Unversehrtheit von sich in der Umgebung aufhaltenden Personen dar, von Sachschäden und durch freigesetzte Hydraulikflüssigkeit verursachte Umweltschäden einmal ganz zu schweigen.

Vor diesem Hintergrund hat sich die vorliegende Erfindung zum Ziel gesetzt, einen Beitrag zu einer erhöhten Sicherheit beim Hochdruckbetrieb von in eingangs dargelegter Weise hergestellten Hochdruck-Hydraulikleitungen zu leisten.

Gelöst wird diese Aufgabenstellung erfindungsgemäß durch ein Ermitteln der Qualität der Verbindung der Anschlussarmatur mit dem Hochdruckschlauch, umfassend
- Beaufschlagen mindestens eines Anschlusses einer zwei Anschlüsse aufweisenden Prüfanordnung, von der ein erster Anschluss elektrisch und/oder magnetisch an die Anschlussarmatur und ein zweiter Anschluss berührungslos elektrisch und/oder magnetisch an die Armierungslage bzw. mindestens eine der Armierungslagen des Hochdruckschlauches angekoppelt ist, mit einem elektrischen Prüfsignal,
- Erfassen eines sich in der Prüfanordnung einstellenden elektrischen Reaktionssignals,
- Vergleichen des Reaktionssignals mit einem in einem Speicher der Prüfanordnung für die betreffende Hochdruckschlauch-Anschlussarmatur-Paarung hinterlegten Sollwertbereich.

Die vorliegende Erfindung macht sich mehrere Erkenntnisse zunutze. Zum einen nutzt sie die Erkenntnis, dass ein Zusammenhang besteht zwischen der Qualität der Verbindung des Hochdruckschlauchabschnitts mit der Anschlussarmatur, d. h. der Sicherheit gegen ein Ausreißen des Hochdruckschlauches aus der Anschlussarmatur oder ein vergleichbares Versagen, und den Eigenschaften des Kontakts zwischen der Armierungslage (bzw. mindestens einer der Armierungslagen) des Hochdruckschlauches einerseits und der Anschlussarmatur andererseits. Weiterhin nutzt sie die Erkenntnis, dass sich eben jene Eigenschaften des Kontakts zwischen der Hochdruckschlauch-Armierungslage und der Anschlussarmatur ihrerseits niederschlagen in dem elektrischen Reaktionssignal, welches sich in einer zwei Anschlüsse aufweisenden Prüfanordnung einstellt, mit welcher der betreffende Bereich der Hochdruck-Hydraulikleitung mit einem elektrischen Prüfsignal beaufschlagt wird, wobei ein erster Anschluss der Prüfanordnung elektrisch und/oder magnetisch an die Anschlussarmatur und ein zweiter Anschluss der Prüfanordnung elektrisch und/oder magnetisch an die Armierungslage (bzw. mindestens eine der Armierungslagen) des Hochdruckschlauches angekoppelt ist. Der zweite Anschluss der Prüfanordnung ist dabei berührungslos an die Armierungslage (bzw. mindestens eine der Armierungslagen) angekoppelt, so dass die Integrität der die betreffende Armierungslage(n) außen und/oder innen umgebenden weiteren Lagen des Hochdruckschlauches nicht beeinträchtigt wird, der Hochdruckschlauch also vollständig unversehrt bleibt. Das Reaktionssignal wird in der Prüfanordnung mit einem Sollwertbereich verglichen, welcher - als individueller, für die betreffende spezifische Hochdruckschlauch-Anschlussarmatur-Paarung geltender Sollwertbereich - in einem Speicher der Prüfanordnung hinterlegt ist. Je nachdem, ob das Reaktionssignal innerhalb der Grenzen des Sollwertbereichs liegt oder aber außerhalb dieser, wird der der Prüfung unterzogene Endabschnitt der Hochdruck-Hydraulikleitung hinsichtlich der Qualität der Verbindung der betreffenden Anschlussarmatur mit dem Hochdruckschlauchabschnitt als gut oder aber nicht ausreichend eingestuft.

Das elektrische Prüfsignal kann dabei, beispielsweise über verschiedene Frequenzgänge oszillierend ausgeführt, vorteilhafterweise so gewählt werden, dass sich über das erfasste elektrische Reaktionssignal auf die Reluktanz und/oder die Impedanz und/oder den elektrischen Widerstand des zwischen den beiden Anschlüssen befindlichen, zu prüfenden Abschnitts der Hochdruck-Hydraulikleitung geschlossen werden kann. Hierfür spielt der Grad bzw. die Fläche der Kontaktierung zwischen der Anschlussarmatur und der mindestens einen Armierungslage eine Rolle, welche(r) - bei vielen gebräuchlichen Anschlussarmaturen - wiederum insbesondere abhängig ist von der Eindringtiefe der Profilierung der Presshülse in die bzw. mindestens eine Armierungslage.

Auch andere Produktionsfehler, welche das durch das elektrische Prüfsignal stimulierte elektrische Reaktionssignal beeinflussen, lassen sich erfassen. Hierzu zählt insbesondere eine geringere als die vorgesehene Einstecktiefe des Hochdruckschlauches in die Anschlussarmatur, so dass nur ein Teil der Profilierung der Presshülse mit der bzw. einer Armierungslage in Kontakt steht. Aber auch ein nicht vorschriftsmäßiges (z. B. zu kurzes) Schälen des Hochdruckschlauches, um in dem Bereich der späteren Verbindung mit der Anschlussarmatur außen und/oder innen Material abzutragen, lässt sich in Anwendung des erfindungsgemäßen Verfahrens detektieren, ebenso ein falsches Pressmaß, eine (z. B. hinsichtlich der Materialpaarung) falsche Hochdruckschlauch-Anschlussarmatur-Kombination und ein nicht ordnungsgemäßer Zustand (z. B. Korrosion oder Beschädigung) der Armierungslage. Indem verschiedene individuelle Produktionsfehler sich in unterschiedlichen charakteristischen Abweichungen des Reaktionssignals von dem sich bei einer ordnungsgemäß hergestellten Hochdruck-Hydraulikleitung einstellenden Reaktionssignal niederschlagen können, kann - bei einer entsprechend detaillierten Auswertung des Reaktionssignals - nicht nur ermittelt werden, ob die jeweils hinsichtlich der Qualität der Verbindung der Anschlussarmatur mit dem Hydraulikschlauch geprüfte Hochdruck-Hydraulikleitung dem Standard entspricht, sondern es kann bei einer möglichen Abweichung ggf. sogar auf die Art des Produktionsfehlers zurückgeschlossen werden. Insoweit ist anzumerken, dass im Rahmen der Erfindung durchaus auch mehrere Reaktionssignale ausgewertet werden können, wie beispielsweise auch die Störung eines Magnetfelds durch das mit dem Prüfsignal beaufschlagte Werkstück.

Hinzuweisen ist vorsorglich darauf, dass die Erfindung hinsichtlich ihrer Anwendbarkeit keineswegs beschränkt ist auf der Herstellung einer Hochdruck-Hydraulikleitung dienende Verfahren, welche Anschlussarmaturen mit einer durch Radialverpressung plastisch verformbaren Presshülse verwenden. Auch andere Anschlussarmaturen, insbesondere sogenannte "reusable fittings", können im Rahmen der vorliegenden Erfindung zum Einsatz kommen. Weiterhin ist darauf hinzuweisen, dass die Angabe, wonach die Prüfanordnung zwei Anschlüsse aufweist, nicht einschränkend verstanden werden darf im Sinne von genau zwei Anschlüssen. So kann die Prüfanordnung beispielsweise auch mehr als zwei, z. B. drei Anschlüsse aufweisen, und zwar namentlich dann, wenn die Erfindung zum Einsatz kommt bei einem Verfahren zur Herstellung einer verzweigten Hochdruck-Hydraulikleitung.

Eine erste bevorzugte Weiterbildung der vorliegenden Erfindung zeichnet sich dadurch aus, dass für ein elektrisches Ankoppeln des ersten Anschlusses der Prüfanordnung an die Anschlussarmatur eine Kontaktsonde auf die Anschlussarmatur aufgesetzt wird unter Ausbildung eines galvanischen Kontakts zwischen der Kontaktsonde und der Anschlussarmatur. Hierdurch wird bei einer einfachen Verfahrensführung eine besonders hohe Reproduzierbarkeit erreicht.

Ebenfalls im Hinblick auf eine hohe Reproduzierbarkeit ist vorteilhaft, wenn, gemäß einer anderen bevorzugten Weiterbildung der Erfindung, das berührungslose elektrische bzw. magnetische Ankoppeln des zweiten Anschlusses der Prüfanordnung an die mindestens eine Armierungslage benachbart zur Anschlussarmatur, d. h. nicht weiter als den 3-fachen Durchmesser des Hochdruckschlauches von dieser entfernt, erfolgt. Besonders günstig ist es, wenn das berührungslose elektrische bzw. magnetische Ankoppeln des zweiten Anschlusses der Prüfanordnung an die mindestens eine Armierungslage in unmittelbarer Nähe zur Anschlussarmatur erfolgt.

Für das berührungslose elektrische bzw. magnetische Ankoppeln des zweiten Anschlusses der Prüfanordnung an die mindestens eine Armierungslage haben sich zwei Vorgehensweisen besonders bewährt, nämlich einerseits eine kapazitive und andererseits eine induktive Ankoppelung. Welcher dieser Möglichkeiten im Einzelfall der Vorrang zu geben ist, richtet sich insbesondere nach der individuellen Ausführung des Hochdruckschlauches, namentlich der Beschaffenheit der mindestens einen Armierungslage sowie der sonstigen Lagen. Auch kann von Einfluss sein, ob die berührungslose elektrische bzw. magnetische Ankopplung des zweiten Anschlusses der Prüfanordnung an die mindestens eine Armierungslage von außen erfolgt oder aber, was allerdings eher die Ausnahme bleiben wird, vom Inneren des Hochdruckschlauches aus.

Mit ganz besonders großem Nutzen lässt sich das erfindungsgemäße Verfahren im Zusammenhang mit solchen Herstellungsverfahren für Hochdruck-Hydraulikleitungen anwenden, bei denen der Hochdruckschlauch vor dem Aufsetzen der Anschlussarmatur auf dessen Endabschnitt endseitig an der Innen- und/oder Außenseite unter zumindest teilweisem Freilegen der bzw. mindestens einer metallischen Armierungslage geschält wird. Denn hier werden durch das Schälen des Hochdruckschlauches günstige Voraussetzungen für eine gute Reproduzierbarkeit der Prüfung geschaffen.

Gemäß einer nochmals anderen bevorzugten Weiterbildung der Erfindung wird die vorliegende Erfindung im Zusammenhang mit einem solchen, eine einen Nippel und eine Presshülse aufweisende Anschlussarmatur verwendenden Herstellungsverfahren für Hochdruck-Hydraulikleitungen angewendet, bei dem
- die Anschlussarmatur auf den Hochdruckschlauch aufgesetzt wird, indem der Nippel innen in den Hochdruckschlauch und dieser in einen Ringspalt zwischen Nippel und Presshülse eintritt, und
- bei der Fügeoperation der so gebildeten Roh-Hydraulikleitung diese in eine Radialpresse mit einem mehrere Pressbacken aufweisenden Presswerkzeug unter Platzierung der Presshülse in dem Presswerkzeug eingelegt und anschließend die Presshülse unter Verringerung der lichten Weite des Ringspalts der Anschlussarmatur radial verpresst wird.

Besonders günstig ist dabei, wenn die Qualität der Verbindung der Anschlussarmatur mit dem Hochdruckschlauch in der Radialpresse ermittelt wird. Ganz besonders vorteilhaft ist, wenn das Ermitteln der Qualität der Verbindung der Anschlussarmatur mit dem Hochdruckschlauch in der Radialpresse vor dem Ende des Radialverpressens einsetzt. Denn in diesem Fall ergibt sich die Möglichkeit, dass die Prüfanordnung dergestalt mit der Steuerung der Radialpresse kommuniziert, dass das Radialverpressen der Presshülse, insbesondere das Ende des Radialverpressens, in Abhängigkeit von einem Signal der Prüfanordnung gesteuert wird. Die auf diese Weise erfolgende Qualitätsüberwachung bereits im noch laufenden Herstellungsprozess mit der Möglichkeit der gezielten Einflussnahme auf den verbleibenden Verlauf des Herstellungsprozesses ist wiederum unter Aspekten der Effizienz besonders vorteilhaft, denn hierdurch lässt sich Ausschuss reduzieren.

Im Sinne der vorstehend dargelegten Weiterbildung des erfindungsgemäßen Verfahrens erfasst die vorliegende Erfindung auch eine zur Durchführung dieses Verfahrens geeignete Radialpresse, umfassend ein mehrere um eine Pressachse herum angeordnete, mittels einer Antriebseinheit radial zur Pressachse bewegbare Presskörper aufweisendes Presswerkzeug und eine zwei Anschlüsse aufweisende Prüfanordnung, wobei ein erster der Anschlüsse zum elektrischen und/oder magnetischen Ankoppeln an die Anschlussarmatur und der zweite Anschluss zum berührungslosen elektrischen und/oder magnetischen Ankoppeln an die Armierungslage bzw. mindestens eine der Armierungslagen des Hochdruckschlauches der Roh-Hydraulikleitung eingerichtet ist. Insbesondere können dabei die Anschlüsse der Prüfanordnung an einem der Presskörper des Presswerkzeugs angeordnet sein. Eine entsprechend ausgeführte, d. h. sich für die Durchführung des vorstehend eingehend dargelegten erfindungsgemäßen Verfahrens eignende Radialpresse ist hinsichtlich ihrer Einsatzmöglichkeiten allerdings nicht auf eben dieses Verfahren beschränkt. Vielmehr lässt sie sich, ebenfalls mit Vorteil, beispielsweise auch für die Herstellung von Isolatoren, von CFK-Wellen sowie von anderen Werkstücken durch Fügen jeweils mehrerer Bauteile miteinander durch radiales Verpressen einsetzen.

Zur Vermeidung von Fehlvorstellungen ist allerdings zu betonen, dass die vorstehend erläuterte in-process-Qualitätsüberwachung keineswegs zwingend ist. Vielmehr kommt im Rahmen der vorliegenden Erfindung ebenfalls in Betracht, dass die Hydraulikleitung der Radialpresse entnommen und erst hernach der Qualitätsprüfung unterzogen wird. Insbesondere kann in diesem Sinne die der Radialpresse entnommene Hydraulikleitung in einen (gesonderten) Druckprüfstand eingelegt werden, wobei die Qualität der Verbindung der Anschlussarmatur mit dem Hochdruckschlauch in dem Druckprüfstand ermittelt wird. Entsprechendes gilt für die kombiniert mit der Reinigung der Hydraulikleitung in einer Reinigungsvorrichtung erfolgende Ermittlung der Qualität der Verbindung der Anschlussarmatur mit dem Hochdruckschlauch.

Wird, im vorstehenden Sinne, die Qualität der Verbindung der Anschlussarmatur mit dem Hochdruckschlauch in einem Druckprüfstand ermittelt, so erfolgt dabei bevorzugt eben jene Ermittlung der Qualität der Verbindung der Anschlussarmatur mit dem Hochdruckschlauch bei unterschiedlichen Druckbeaufschlagungen mittels eines Prüfmediums (Luft, Gas, Wasser, Öl, oder dergleichen). Denn mögliche Abweichungen der sich bei unterschiedlichen Druckverhältnissen einstellenden Reaktionssignale voneinander lassen ebenfalls Rückschlüsse auf den Zustand der geprüften Hochdruck-Hydraulikleitung zu.

Im Folgenden wird die vorliegende Erfindung anhand eines in der Zeichnung schematisch veranschaulichten bevorzugten Ausführungsbeispiels einer zur Durchführung des Verfahrens bestimmten und geeigneten Radialpresse näher erläutert. Die Zeichnung stellt dabei einen Axialschnitt durch eben eine solche Radialpresse dar.

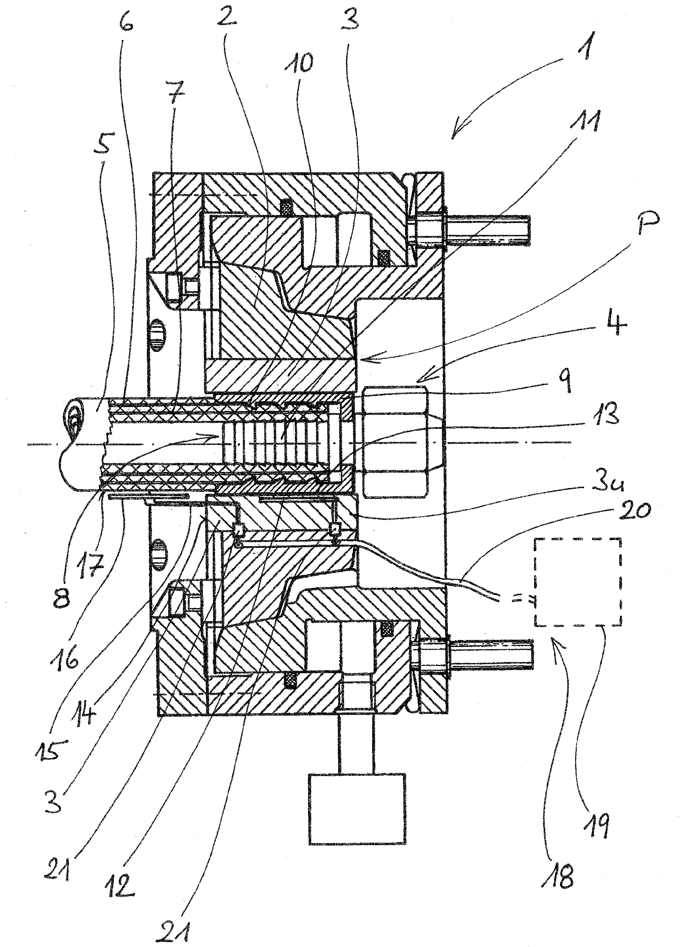

Mit Ausnahme der nachstehend dargelegten Gesichtspunkte und Besonderheiten entspricht die Radialpresse 1 nach dem dargestellten Ausführungsbeispiel uneingeschränkt jener nach Fig. 1 der DE 28 44 475 A1. Zur Vermeidung unnötiger Wiederholungen wird somit hinsichtlich des Aufbaus und der Konstruktion, der technischen Details sowie der Funktionsweise der Radialpresse auf eben die DE 28 44 475 A1 verwiesen und Bezug genommen.

Gezeigt ist die Radialpresse 1 mit (auswechselbar) auf die Pressbacken 2 aufgesetzten Pressbackenaufsätzen 3; jeweils die Gesamtheit aus einer Pressbacke 2 und einem darauf aufgesetzten Pressbackenaufsatz 3 bildet dabei einen Presskörper P. Auf die Veranschaulichung von Details der Verbindung der Pressbackenaufsätze 3 mit den Pressbacken 2 wurde dabei der Übersichtlichkeit halber verzichtet. Hierzu können die Pressbackenaufsätze beispielsweise in üblicher Weise Bolzen aufweisen, welche in korrespondierende, an den Pressbacken 2 ausgeführte Aufnahmen einrasten (vgl. beispielsweise auch DE 201 09 212 U1).

Weiterhin ist die Radialpresse 1 in ihrer Verwendung zum Anpressen einer Anschlussarmatur 4 endseitig an einen Hochdruckschlauch 5 gezeigt. Der Hochdruckschlauch 5 weist dabei zwei Armierungslagen 6, 7 auf, wobei die äußere Armierungslage 6 in üblicher Weise aus einem Metallgeflecht besteht. Die Anschlussarmatur 4 umfasst - in ebenfalls üblicher Weise einen Nippel 8 und eine Presshülse 9. Diese weist an ihrem Innenumfang mehrere ringförmige Klemmvorsprünge 10 auf. Der in den Hochdruckschlauch 5 einzusteckende Abschnitt 11 des Nippels 8 weist seinerseits eine in üblicher Weise profilierte Oberfläche auf. In seinem in die Anschlussarmatur 4, d. h. in den zwischen der Presshülse 9 und dem Abschnitt 11 des Nippels 8 bestehenden Ringraum einzusteckenden Bereich ist der Hochdruckschlauch 5 auf seiner Außenseite geschält, und zwar bis zur äußeren Armierungslage 6.

All dieses ist üblich und dem Fachmann bestens bekannt, so dass es weiterer Erläuterungen nicht bedarf.

Wie dies anhand des unteren Pressbackenaufsatzes 3u veranschaulicht ist, ist in (mindestens) einen der Pressbackenaufsätze 3 ein erster Anschluss 12 eingebettet, und zwar nahe zu der - zur Anlage an der Presshülse 9 der Anschlussarmatur 4 bestimmten - Pressfläche 13 des betreffenden Pressbackenaufsatzes 3u.

So kann über eine geeignete elektrische Beaufschlagung des ersten Anschlusses 12 dieser induktiv an die Presshülse 9 angekoppelt werden.

An dessen dem Hochdruckschlauch 5 zugewandter Stirnseite 14 ist an dem unteren Pressbackenaufsatz 3u über einen Halter 15 ein zweiter Anschluss 16 angebracht, und zwar dergestalt, dass er der Oberfläche 17 des Hochdruckschlauches 5 nahe gegenübersteht. So kann über eine geeignete elektrische Beaufschlagung des zweiten Anschlusses 16 dieser induktiv an die äußere Armierungslage 6 des Hochdruckschlauches 5 angekoppelt werden.

Der erste Anschluss 12 sowie der zweite Anschluss 16 sind dabei Teil einer Prüfanordnung 18, welche weiterhin ein Steuermodul 19 umfasst. Die beiden Anschlüsse 12 und 16 sind dabei mit dem Steuermodul 19 über eine Leitung 20 sowie, im Hinblick auf die Auswechselbarkeit der Pressbackenaufsätze 3, zwei Steck-Übergaben 21 elektrisch verbunden. Über diese elektrische Verbindung erfolgt, je nach dem individuellen Prüfprogramm, die Beaufschlagung des ersten Anschlusses 12 und/oder des zweiten Anschlusses 16 durch das Steuermodul mit einem elektrischen Prüfsignal.

In Abhängigkeit von dem individuellen Prüfprogramm wirkt im Folgenden der erste Anschluss 12 und/oder der zweite Anschluss 16 als Aufnehmer. Das sich unter dieser Verwendung mindestens eines der Anschlüsse 12 und 16 als Aufnehmer in der Prüfanordnung einstellende elektrische Reaktionssignal wird im Weiteren mit einem - für die betreffende spezifische Hochdruckschlauch-Anschlussarmatur-Paarung - in einem Speicher der Prüfanordnung hinterlegten Sollwertbereich verglichen. Liegt das tatsächliche Reaktionssignal innerhalb der Bandbreite des Sollwertbereichs, gelten die Verpressung und somit das Werkstück als einwandfrei. Anderenfalls erfolgt, je nach dem Grad und der Ausrichtung der Abweichung, entweder eine Nachbearbeitung in der Radialpresse (Nachverpressen), oder aber das Werkstück wird als fehlerhaft ausgesondert.

Es ist ersichtlich, dass die Erläuterung der vorliegenden Erfindung anhand einer - im Sinne der Erfindung ausgestatteten - Radialpresse der Bauweise nach der DE 28 44 475 A1 rein exemplarisch ist und dass die Erfindung in vergleichbarere Weise in nach anderen Konzepten arbeitende Radialpressen (z. B. sogenannte "Jochpressen" beispielsweise gemäß DE 20 2016 100 660 U1 und dem darin zitierten weiteren Stand der Technik) implementiert werden kann.

## Patentansprüche

1. Verfahren zur Herstellung einer Hochdruck-Hydraulikleitung unter Anbringen einer Anschlussarmatur (4) endseitig an einem mehrlagigen, mindestens eine Armierungslage (6, 7) aufweisenden Hochdruckschlauch (5), umfassend
- Bereitstellen eines Abschnitts eines armierten Hochdruckschlauches (5) sowie einer mit diesem zu fügenden Anschlussarmatur (4),
- Aufsetzen der Anschlussarmatur (4) auf den Endabschnitt des Hochdruckschlauches (5),
- Durchführen einer Fügeoperation unter Ausbildung einer dichten Verbindung des Hochdruckschlauches (5) mit der Anschlussarmatur (4),
**gekennzeichnet durch** ein Ermitteln der Qualität der Verbindung der Anschlussarmatur (4) mit dem Hydraulikschlauch (5), umfassend
- Beaufschlagen mindestens eines Anschlusses (12; 16) einer zwei Anschlüsse (12, 16) aufweisenden Prüfanordnung (18), von der ein erster Anschluss (12) elektrisch und/oder magnetisch an die Anschlussarmatur (4) und ein zweiter Anschluss (16) berührungslos elektrisch und/oder magnetisch an die Armierungslage (6) bzw. mindestens eine der Armierungslagen (6, 7) des Hochdruckschlauches (5) angekoppelt ist, mit einem elektrischen Prüfsignal,
- Erfassen eines sich in der Prüfanordnung einstellenden elektrischen Reaktionssignals,
- Vergleichen des Reaktionssignals mit einem in einem Speicher der Prüfanordnung (18) für die betreffende Hochdruckschlauch-Anschlussarmatur-Paarung hinterlegten Sollwertbereich.

2. Verfahren nach Anspruch 1, **dadurch gekennzeichnet, dass** zum elektrischen Ankoppeln des ersten Anschlusses (12) der Prüfanordnung (18) an die Anschlussarmatur (4) eine Kontaktsonde auf die Anschlussarmatur (4) aufgesetzt wird unter Ausbildung eines galvanischen Kontakts zwischen der Kontaktsonde und der Anschlussarmatur (4).

3. Verfahren nach Anspruch 1 oder Anspruch 2, **dadurch gekennzeichnet, dass** das berührungslose elektrische Ankoppeln des zweiten Anschlusses (16) der Prüfanordnung (18) an die mindestens eine Armierungslage (6, 7) benachbart zur Anschlussarmatur (4), d. h. nicht weiter als den 3-fachen Durchmesser des Hochdruckschlauches (5) von dieser entfernt, erfolgt.

4. Verfahren nach Anspruch 3, **dadurch gekennzeichnet, dass** das berührungslose elektrische Ankoppeln des zweiten Anschlusses (16) der Prüfanordnung (18) an die mindestens eine Armierungslage (6, 7) unmittelbarer Nähe zur Anschlussarmatur (4) erfolgt.

5. Verfahren nach einem der Ansprüche 1 bis 4, **dadurch gekennzeichnet, dass** der zweite Anschluss (16) der Prüfanordnung (18) an die mindestens eine Armierungslage (6, 7) kapazitiv angekoppelt wird.

6. Verfahren nach einem der Ansprüche 1 bis 4, **dadurch gekennzeichnet, dass** der zweite Anschluss (16) der Prüfanordnung (18) an die mindestens eine Armierungslage (6, 7) induktiv angekoppelt wird.

7. Verfahren nach einem der Ansprüche 1 bis 6, **dadurch gekennzeichnet, dass** der Hochdruckschlauch (5) vor dem Aufsetzen der Anschlussarmatur (4) auf dessen Endabschnitt endseitig an der Innen- und/oder Außenseite unter zumindest teilweisem Freilegen der bzw. mindestens einer metallischen Armierungslage (6, 7) geschält wird.

8. Verfahren nach einem der Ansprüche 1 bis 7, **dadurch gekennzeichnet, dass** bei Verwendung einer einen Nippel (8) und eine Presshülse (9) aufweisenden Anschlussarmatur (4)
- die Anschlussarmatur (4) auf den Hochdruckschlauch (5) aufgesetzt wird, indem der Nippel (8) innen in den Hochdruckschlauch (5) und dieser in einen Ringspalt zwischen Nippel (8) und Presshülse (9) eintritt,
- und bei der Fügeoperation der so gebildeten Roh-Hydraulikleitung diese in eine Radialpresse (1) mit einem mehrere Presskörper (P) aufweisenden Presswerkzeug unter Platzierung der Presshülse (9) in dem Presswerkzeug eingelegt und anschließend die Presshülse (9) unter Verringerung der lichten Weite des Ringspalts der Anschlussarmatur (4) radial verpresst wird.

9. Verfahren nach Anspruch 8, **dadurch gekennzeichnet, dass** die Qualität der Verbindung der Anschlussarmatur (4) mit dem Hochdruckschlauch (5) in der Radialpresse (1) ermittelt wird.

10. Verfahren nach Anspruch 9, **dadurch gekennzeichnet, dass** das Ermitteln der Qualität der Verbindung der Anschlussarmatur (4) mit dem Hochdruckschlauch (5) in der Radialpresse (1) vor dem Ende des Radialverpressens einsetzt.

11. Verfahren nach Anspruch 10, **dadurch gekennzeichnet, dass** die Prüfanordnung (18) dergestalt mit der Steuerung der Radialpresse (1) kommuniziert, dass das Radialverpressen der Presshülse (9), insbesondere das Ende des Radialverpressens, in Abhängigkeit von einem Signal der Prüfanordnung (18) gesteuert wird.

12. Verfahren nach Anspruch 8, **dadurch gekennzeichnet, dass** die Hydraulikleitung der Radialpresse (1) entnommen und in einen Druckprüfstand eingelegt wird, wobei die Qualität der Verbindung der Anschlussarmatur (4) mit dem Hochdruckschlauch (5) in dem Druckprüfstand ermittelt wird.

13. Verfahren nach Anspruch 12, **dadurch gekennzeichnet, dass** die Ermittlung der Qualität der Verbindung der Anschlussarmatur (4) mit dem Hochdruckschlauch (5) bei unterschiedlichen Druckbeaufschlagungen mittels eines Prüfmediums erfolgt.

14. Radialpresse zur Durchführung des Verfahrens nach Anspruch 9, umfassend ein mehrere um eine Pressachse herum angeordnete, mittels einer Antriebseinheit radial zur Pressachse bewegbare Presskörper (P) aufweisendes Presswerkzeug und eine zwei Anschlüsse (12, 16) aufweisende Prüfanordnung (18), wobei ein erster (12) der Anschlüsse (12, 16) zum elektrischen und/oder magnetischen Ankoppeln an die Anschlussarmatur (4) und der zweite Anschluss (16) zum berührungslosen elektrischen und/oder magnetischen Ankoppeln an die Armierungslage (6) bzw. mindestens eine der Armierungslagen (6, 7) der Roh-Hydraulikleitung eingerichtet ist.

15. Radialpresse nach Anspruch 14, **dadurch gekennzeichnet, dass** die Anschlüsse (12, 16) der Prüfanordnung (18) an einem der Presskörper (P) des Presswerkzeugs angeordnet sind.

## Claims

1. Method for producing a high pressure hydraulic line by attaching a connection fitting (4) at the end to a multi-layered high pressure hose (5) having at least one reinforcing layer (6, 7), comprising
- providing a section of a reinforced high pressure hose (5) as well as a connection fitting (4) to be joined therewith,
- putting the connection fitting (4) on the end section of the high pressure hose (5),
- carrying out a joining operation to form a tight connection between the high pressure hose (5) and the connection fitting (4),
**characterized by** determining the quality of the connection between the connection fitting (4) and the hydraulic hose (5), comprising
- applying an electrical test signal to at least one connection (12; 16) of a test arrangement (18) having two connections (12, 16), of which a first connection (12) is electrically and/or magnetically coupled to the connection fitting (4) and a second connection is electrically and/or magnetically coupled without contact to the reinforcing layer (6) or at least one of the reinforcing layers (6, 7) of the high pressure hose (5),
- detecting an electrical response signal occurring in the test arrangement,
- comparing the response signal with a setpoint range stored in a memory of the test arrangement (18) for the relevant high pressure hose connection fitting pair.

2. Method according to Claim 1, **characterized in that** in order to electrically couple the first connection (12) of the test arrangement (18) to the connection fitting (4), a contact probe is placed on the connection fitting (4) forming galvanic contact between the contact probe and the connection fitting (4).

3. Method according to Claim 1 or Claim 2, **characterized in that** the second connection (16) of the test arrangement (18) is electrically coupled without contact to the at least one reinforcing layer (6, 7) adjacent to the connection fitting (4), i.e. no further than 3 times the diameter of the high pressure hose (5) away therefrom.

4. Method according to Claim 3, **characterized in that** the second connection (16) of the test arrangement (18) is electrically coupled without contact to the at least one reinforcing layer (6, 7) in the immediate vicinity of the connection fitting (4).

5. Method according to one of Claims 1 to 4, **characterized in that** the second connection (16) of the test arrangement (18) is capacitively coupled to the at least one reinforcing layer (6, 7).

6. Method according to one of Claims 1 to 4, **characterized in that** the second connection (16) of the test arrangement (18) is inductively coupled to the at least one reinforcing layer (6, 7).

7. Method according to one of Claims 1 to 6, **characterized in that** the high pressure hose (5) is peeled at the end on the inside and/or outside before the connection fitting (4) is placed on its end section, at least partially exposing the or at least one metallic reinforcing layer (6, 7).

8. Method according to one of Claims 1 to 7, **characterized in that** when using a connection fitting (4) having a nipple (8) and a press sleeve (9),
- the connection fitting (4) is placed on the high pressure hose (5) by the nipple (8) entering the inside of the high pressure hose (5) and the latter entering an annular gap between the nipple (8) and press sleeve (9),
- and during the joining operation of the raw hydraulic line formed in this way, the latter is inserted into a radial press (1) with a pressing tool having a plurality of pressing bodies (P), with the press sleeve (9) being placed in the pressing tool, and then the press sleeve (9) is radially pressed, reducing the clear width of the annular gap of the connection fitting (4).

9. Method according to Claim 8, **characterized in that** the quality of the connection between the connection fitting (4) and the high pressure hose (5) is determined in the radial press (1).

10. Method according to Claim 9, **characterized in that** determining the quality of the connection between the connection fitting (4) and the high pressure hose (5) in the radial press (1) begins before the end of the radial pressing.

11. Method according to Claim 10, **characterized in that** the test arrangement (18) communicates with the control system of the radial press (1) in such a way that the radial pressing of the press sleeve (9), in particular the end of the radial pressing, is controlled depending on a signal of the test arrangement (18).

12. Method according to Claim 8, **characterized in that** the hydraulic line is removed from the radial press (1) and inserted into a pressure test bench, wherein the quality of the connection between the connection fitting (4) and the high pressure hose (5) is determined in the pressure test bench.

13. Method according to Claim 12, **characterized in that** the quality of the connection between the connection fitting (4) and the high pressure hose (5) is determined at different pressures by means of a test medium.

14. Radial press for carrying out the method according to Claim 9, comprising a pressing tool having a plurality of pressing bodies (P) arranged around a press axis and movable radially to the press axis by means of a drive unit, and a test arrangement (18) having two connections (12, 16), wherein a first (12) of the connections (12, 16) is designed to be electrically and/or magnetically coupled to the connection fitting (4), and the second connection (16) is designed to be electrically and/or magnetically coupled without contact to the reinforcing layer (6) or at least one of the reinforcing layers (6, 7) of the raw hydraulic line.

15. Radial press according to Claim 14, **characterized in that** the connections (12, 16) of the test arrangement (18) are arranged on one of the pressing bodies (P) of the pressing tool.

## Revendications

1. Procédé de fabrication d'une conduite hydraulique à haute pression par montage d'une garniture de raccord (4) en extrémité sur un flexible à haute pression (5) multicouche, comportant au moins une couche d'armature (6, 7), comprenant
- la préparation d'une section d'un flexible à haute pression armé (5) ainsi que d'une garniture de raccord (4) à assembler à celui-ci,
- la pose de la garniture de raccord (4) sur la section extrême du flexible à haute pression (5),
- l'exécution d'une opération d'assemblage en constituant une liaison hermétique du flexible à haute pression (5) avec la garniture d'armature (4),
**caractérisé par** une détermination de la qualité de la liaison de la garniture de raccord (4) avec le flexible hydraulique (5), comprenant
- l'application d'un signal de contrôle électrique à au moins un raccord (12, 16) d'un système de contrôle (18) comportant deux raccords (12, 16), dont un premier raccord (12) est couplé électriquement et/ou magnétiquement à la garniture de raccord (4) et un deuxième raccord (16) est couplé sans contact électriquement et/ou magnétiquement à la couche d'armature (6) ou au moins une des couches d'armature (6, 7) du flexible à haute pression (5),
- la saisie d'un signal de réaction électrique s'établissant dans le système de contrôle,
- la comparaison du signal de réaction à une plage de valeurs seuils mémorisée dans une mémoire du système de contrôle (18) pour l'appariement correspondant Flexible à haute pression - Garniture de raccord.

2. Procédé selon la revendication 1, **caractérisé en ce que** pour le couplage électrique du premier raccord (12) du système de contrôle (18) à la garniture de raccord (4), une sonde de contact est posée sur la garniture de raccord (4) en constituant un contact galvanique entre la sonde de contact et la garniture de raccord (4).

3. Procédé selon la revendication 1 ou la revendication 2, **caractérisé en ce que** le couplage électrique sans contact du deuxième raccord (16) du système de contrôle (18) à au moins une couche d'armature (6, 7) a lieu proche de la garniture de raccord (4), c'est-à-dire pas plus éloignée de celle-ci que 3 fois le diamètre du flexible à haute pression (5).

4. Procédé selon la revendication 3, **caractérisé en ce que** le couplage électrique sans contact du deuxième raccord (16) du système de contrôle (18) a lieu sur au moins une couche d'armature (6, 7) à proximité directe de la garniture de raccord (4).

5. Procédé selon l'une quelconque des revendications 1 à 4, **caractérisé en ce que** le deuxième raccord (16) du système de contrôle (18) est couplé de façon capacitive à au moins une couche d'armature (6, 7).

6. Procédé selon l'une quelconque des revendications 1 à 4, **caractérisé en ce que** le deuxième raccord (16) du système de contrôle (18) est couplé de façon inductive à au moins une couche d'armature (6, 7).

7. Procédé selon l'une quelconque des revendications 1 à 6, **caractérisé en ce que** le flexible à haute pression (5) est dénudé avant la pose de la garniture de raccord (4) sur sa section extrême à l'extrémité sur le côté intérieur et/ou extérieur en libérant au moins en partie la ou une couche d'armature métallique (6, 7).

8. Procédé selon l'une quelconque des revendications 1 à 7, **caractérisé en ce que** pour l'utilisation d'une garniture de raccord (4) comportant un embout fileté (8) et un manchon de pression (9),
- la garniture de raccord (4) est posée sur le flexible à haute pression (5) dans lequel l'embout fileté (8) pénètre à l'intérieur dans le flexible à haute pression (5) et celui-ci dans un interstice annulaire entre l'embout fileté (8) et le manchon de pression (9),
- et lors de l'opération d'assemblage de la conduite hydraulique brute ainsi formée, celle-ci est introduite dans une presse radiale (1) avec un outil de presse comportant plusieurs corps de pression (P) en mettant en place le manchon de pression (9) dans l'outil de presse et le manchon de pression (9) est ensuite radialement comprimé en réduisant l'écartement intérieur de l'interstice annulaire de la garniture de raccord (4) .

9. Procédé selon la revendication 8, **caractérisé en ce que** la qualité de la liaison de la garniture de raccord (4) avec le flexible à haute pression (5) est déterminée dans la presse radiale (1).

10. Procédé selon la revendication 9, **caractérisé en ce que** la détermination de la qualité de la liaison de la garniture de raccord (4) avec le flexible à haute pression (5) intervient dans la presse radiale (1) avant la fin de la compression radiale.

11. Procédé selon la revendication 10, **caractérisé en ce que** le système de contrôle (18) communique avec la commande de la presse radiale (1) de telle manière que la compression radiale du manchon de pression (9), en particulier la fin de la compression radiale, est commandée en fonction d'un signal du système de contrôle (18) .

12. Procédé selon la revendication 8, **caractérisé en ce que** la conduite hydraulique de la presse radiale (1) est enlevée et placée dans un banc de contrôle de pression, sachant que la qualité de la liaison de la garniture de raccord (4) avec le flexible à haute pression (5) est déterminée dans le banc de contrôle de pression.

13. Procédé selon la revendication 12, **caractérisé en ce que** la détermination de la qualité de la liaison de la garniture de raccord (4) avec le flexible à haute pression (5) a lieu au moyen d'un milieu de contrôle avec des applications de pression différentes.

14. Presse radiale pour l'exécution du procédé selon la revendication 9, comprenant un outil de presse comportant plusieurs corps de presse (P) disposés autour d'un axe de pression, radialement mobiles par rapport à l'axe de pression au moyen d'une unité d'entraînement et un système de contrôle (18) comportant deux raccords (12, 16), sachant qu'un premier (12) des raccords (12, 16) est agencé pour le couplage électrique et/ou magnétique à la garniture de raccord (4) et le deuxième raccord (16) pour le couplage électrique et/ou magnétique sans contact à la couche d'armature (6) ou au moins une des couches d'armature (6, 7) de la conduite hydraulique brute.

15. Presse radiale selon la revendication 14, **caractérisée en ce que** les raccords (12, 16) du système de contrôle (18) sont disposés sur un des corps de presse (P) de l'outil de presse.
